# EUROPEAN PATENT APPLICATION

(11) **EP 4 350 940 A1**
(43) Date of publication of application: **10.04.2024**
(21) Application number: 22811186.0
(22) Date of filing: 16.05.2022
(51) Int. Cl.: H02J 7/10, H02M 3/28, H01M 10/44, H01M 10/48

(54) **CHARGING DEVICE AND PROGRAM**

(30) Priority: 26.05.2021 JP 2021088602
(71) Applicant: DENSO CORPORATION, Kariya-city, Aichi 448-8661 (JP)
(72) Inventor: SHIRAKAWA, Kazuhiro, Kariya-city, Aichi 4488661 (JP); TANI, Keiya, Kariya-city, Aichi 4488661 (JP); KUBO, Shunichi, Kariya-city, Aichi 4488661 (JP)
(74) Representative: TBK
(86) International application number: PCT/JP2022/020367
(87) International publication number: WO 2022/249913

(57) **Abstract**

An electrical charging apparatus (10) working to electrically charge an electrical storage device (110) includes an electrical power converter (13, 20, 30) and a controller (70). The electrical power converter converts an alternating-current input voltage into a direct-current voltage and outputs it to the electrical storage device. The controller works to control the electrical power converter to pulsate the charging current supplied from the electrical power converter to the electrical storage device. The controller also controls the electrical power converter to set a pulsation frequency of the charging current to an integral multiple of the frequency of the input voltage and also to bring a phase difference between a zero-crossing time of the input voltage and a time when the charging current is minimized to be smaller than or equal to one-eighth of one cycle of the input voltage.

## Description

The present application claims the benefit of priority of Japanese Patent Application No. 2021-088602 filed on May 26, 2021, the disclosure of which is incorporated in its entirety herein by reference.

### Technical Field

This disclosure relates generally to an electrical charging apparatus and a program therefor.

### Background of Art

Patent literature 1 teaches a charging device which electrically charges an electrical storage device. The charging device includes an electrical power converter and a controller. The electrical power converter works to convert alternating-current power, as supplied from an external device, into direct-current power and output it to the electrical storage device. The controller controls the operation of the electrical power converter to add an alternating-current waveform to the direct-current power delivered from the electrical charging device to the electrical storage device. The charging device is capable of pulsating the charging current flowing into the electrical storage device to quickly elevate the temperature of the electrical storage device in low-temperature conditions.

### PRIOR ART DOCUMENT

### PATENT LITERATURE

### PATENT LITERATURE 1 : Japanese Patent First Publication No. 2013-30351

### SUMMARY OF THE INVENTION

The pulsation of the charging current causes electrical current which has a harmonic generated as a function of the frequency of the pulsation to be inputted into the electrical power converter, which results in an increase in distortion of the current inputted into the electrical power converter. This leads to a risk that a harmonic component which is contained in the inputted current and has a given order may exceed a permissible value specified by a given standard (e.g., International Electrotechnical Commission IEC61000-3-2).

The above drawback may be alleviated by pulsating the charging current at a frequency that lies out of a frequency band of harmonics required by the standard. However, that frequency may be out of a frequency band producing a low impedance suitable for elevating the temperature of the electrical storage device, thereby causing a problem that it is impossible to increase the temperature of the electrical storage device in a required way.

Usually, setting the frequency of pulsation of the charging current to be in the frequency band suitable for increasing the temperature of the electrical storage device requires decreasing the pulsation of the charging current in order to reduce the distortion of the current inputted into the electrical power converter. This will, however, result in a decrease in ability to increase the temperature of the electrical storage device.

Accordingly, there is room for improving the techniques to pulsate the charging current and elevate the temperature of the electrical storage device.

It is, therefore, a principal object to provide an electrical charging apparatus capable of minimizing the distortion of electrical current inputted to an electrical power converter and increasing the temperature of an electrical storage device in a suitable way.

This disclosure is to provide an electrical charging apparatus for electrically charging an electrical storage device. The electrical charging apparatus comprises: (a) an electrical power converter which works to convert an alternating-current input voltage into a direct-current voltage and output the direct-current power to the electrical storage device; and (b) a controller which controls an operation of the electrical power converter to pulsate a charging current, as outputted from the electrical power converter to the electrical storage device. The controller works to control the operation of the electrical power converter to set a pulsation frequency of the charging current to be an integral multiple of a frequency of the input voltage and also to bring a phase difference between a zero-crossing time of the input voltage and a time when the charging current is minimized to be smaller than or equal to one-eighth of one cycle of the input voltage.

The pulsation frequency of the charging current for electrically charging the electrical storage device is, as described above, set to an integral multiple of the frequency of the voltage inputted to the electrical power converter. The phase difference between the voltage inputted to the electrical power converter and the charging voltage for the electrical storage device is reduced. This enables the oscillation or pulsation of an input current, as inputted into the electric charging apparatus, following the pulsation of the charging current to be substantially synchronized with a fundamental frequency of the input current, thereby reducing harmonics of the input current delivered to the electrical power converter to minimize the distortion of the input current.

In view of the above fact, the controller in this disclosure is designed to control the operation of the electrical power converter to set the pulsation frequency of the charging current to an integral multiple of the frequency of the input voltage and also to bring the phase difference between the zero-crossing time of the input voltage and the time when the charging current reaches a minimum value to be smaller than or equal to one-eighth of one cycle of the input voltage. This minimizes the distortion of the input current and achieves a required rise in temperature of the electrical storage device.

### BRIEF DESCRIPTION OF THE DRAWINGS

The above object, other objects, features, and advantages of or offered by this disclosure will be understood more fully from the detailed description given hereinbelow and from the accompanying drawings.

In the drawings:
Fig. 1 is a block diagram which illustrates an overall structure of a system according to the first embodiment;
Fig. 2 is a functional block diagram which represents a charging task to electrically charge an electrical storage device;
Figs. 3(A) to 3(G) are time charts which demonstrate a change in charging command current, etc.;
Fig. 4 is a flowchart of a sequence of steps of a charging task;
Figs. 5(A) to 5(C) are time charts which demonstrate an example of results of calculation made in a charging task;
Figs. 6(A) to 6(E) are time charts which demonstrate a change in charging command current, etc., in the second embodiment;
Figs. 7(A) to 7(C) are time charts which demonstrate an example of results of calculation made in a charging task in the second embodiment;
Figs. 8(A) to 8(C) are time charts which demonstrate results of calculation made in a charging task in a comparative example; and
Fig. 9 is a block diagram which illustrates a structure which transmits a charging command current from a primary microcomputer to a DC-to-DC microcomputer.

### EMBODIMENT FOR CARRYING OUT THE INVENTION

### FIRST EMBODIMENT

The electrical charging apparatus 10 according to the first embodiment will be described below with reference to the drawings. The electrical charging apparatus 10 is designed to be mounted in a vehicle equipped with an electrical rotating machine used as a traction power source

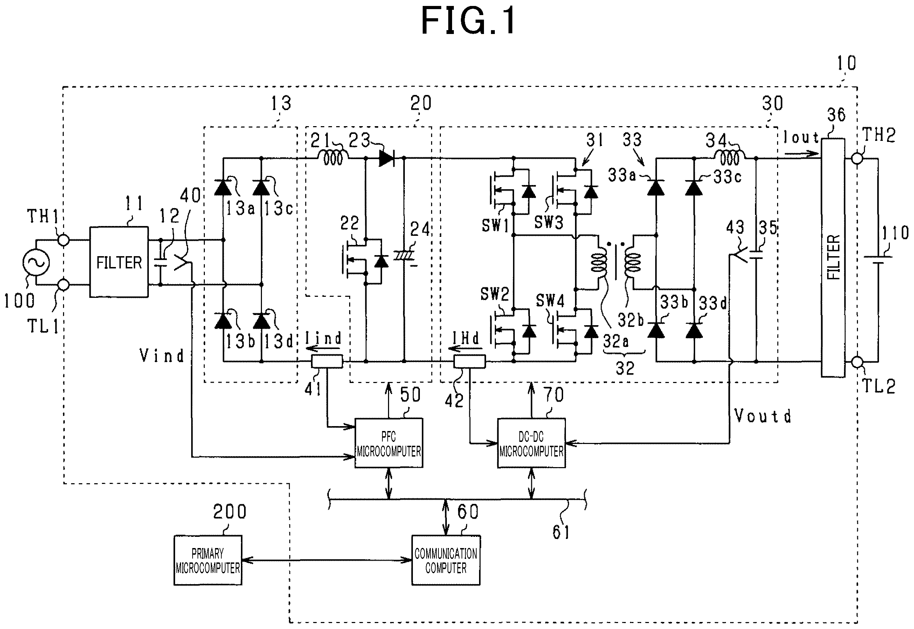

The electrical charging apparatus 10, as illustrated in Fig. 1, includes the first filter 11 working as a noise filter, the first capacitor 12, and the input-side rectifier circuit 13. The external alternating-current supply 100 is connected to the first high-potential terminal TH1 and the first low-potential terminal TL1 of the electrical charging apparatus 10. The input-side rectifier circuit 13 is also connected to the terminals TH1 and TL1 through the first filter 11 and the first capacitor 12.

The input-side rectifier circuit 13 includes first to fourth input-side diodes 13a to 13d. The input-side rectifier circuit 13 works to full-wave rectify an alternating-current inputted thereto.

The electrical charging apparatus 10 includes the boost chopper circuit 20 and the DC-to-DC converter 30. The boost chopper circuit 20 functions as a power factor improvement circuit and includes the reactor 21, the power factor controlling switch 22, the diode 23, and the DC-link capacitor 24. In this embodiment, the power factor controlling switch 22 is made of an n-channel MOSFET. The DC-link capacitor 24 includes an electrolytic capacitor. In this embodiment, the input-side rectifier circuit 13 and the boost chopper circuit 20 serve as a first converting unit.

The DC-to-DC converter 30 includes the full-bridge circuit 31, the electrical transformer 32, the output-side rectifier circuit 33, the reactor 34, and the second capacitor 35. The full-bridge circuit 31 includes the first to fourth switches 31a to 31d. In this embodiment, the switches 31a to 31d are made of n-channel MOSFETs. The second coil 32b is magnetically coupled with the first coil 32a through a core of the transformer 32. The DC-to-DC converter 30 works as a second converting unit.

The DC-link capacitor 24 has a first end connected to drains of the first switch 31a and the third switch 31c. The DC-link capacitor 24 also has a second end connected to sources of the second switch 31b and the fourth switch 31d. The first coil 32a of the transformer 32 has a first end connected to the source of the first switch 31a and the drain of the second switch 31b. The first coil 32a also has a second end connected to the source of the third switch 31c and the drain of the fourth switch 31d.

The output-side rectifier circuit 33 includes the first to fourth output-side diodes 33a to 33d. The output-side rectifier circuit 33 works to full-wave rectify ac current delivered from the second coil 32b and output it. The first output-side diode 33a and the third output-side diode 33c are connected at cathodes thereof to the second high-potential terminal TH2 of the electrical charging apparatus 10 through the reactor 34. The second output-side diode 33b and the fourth output-side diode 33d are connected at anodes thereof to the second low-potential terminal TL2 of the electrical charging apparatus 10. The second filer 36 serving as a noise filter is disposed between a combination of the reactor 34 and the second capacitor 35 and a combination of the terminals TH2 and TL2.

The electrical storage device 110 has a positive terminal connected to the second high-potential terminal TH2 and also has a negative terminal connected to the second low-potential terminal TL2. In this embodiment, the electrical storage device 110 is implemented by a storage battery, such as a nickel-hydrogen battery or a lithium-ion battery.

The electrical charging apparatus 10 also includes the input voltage sensor 40, the first current sensor 41, the second current sensor 42, and the output voltage sensor 43. The input voltage sensor 40 works to measure terminal-to-terminal voltage that is voltage developed between terminals of the first capacitor 12. The first current sensor 41 works to measure electrical current flowing through the boost chopper circuit 20. The second current sensor 42 works to measure electrical current inputted to the DC-to-DC converter 30. The output voltage sensor 43 works to measure a terminal-to-terminal voltage that is voltage appearing between terminals of the second capacitor 35.

The electrical charging apparatus 10 also includes the PFC microcomputer 50, the communication microcomputer 60, and the DC-to-DC microcomputer 70 serving as a controller. Each of the microcomputers 50, 60, and 70 is equipped with a CPU and designed to perform functions achieved by software stored in a substantive memory, hardware, or a combination thereof. For instance, each of the microcomputers 50, 60, and 70 may be implemented by electronic hardware, e.g., an electronic circuit. In this case, the functions of each of the microcomputers 50, 60, and 70 is realized by a digital circuit including a plurality of logic circuits or an analog circuit. Each of the microcomputers 50, 60, and 70 may be configured to execute programs stored in a memory, such as a non-transitory tangible storage medium installed therein. The programs include a charging program, as will be described later in detail. The programs are performed to execute given tasks. The memory may be made of a non-volatile memory. The programs stored in the memory may be updated using a network, such as the internet.

The PFC microcomputer 50 has inputted thereto the input current *Iind* measured by the first current sensor 41 and the input voltage *Vind* measured by the input voltage sensor 40. The PFC microcomputer 50 controls an operation of the power factor controlling switch 22. Specifically, the PFC microcomputer 50 controls the operation of the power factor controlling switch 22 to set a power factor of an output of the external alternating-current supply 100 to be higher than or equal to a predetermined power factor (e.g., 0.95) as a function of the input current *Iind* and the input voltage *Vind.*

The DC-to-DC microcomputer 70 has inputted thereto the *dc-to-dc* input current *IHd,* as measured by the second current sensor 42, and the output voltage *Voutd,* as measured by the output voltage sensor 43. The DC-to-DC microcomputer 70 alternately turns on a first combination of the first switch 31a and the fourth switch 31d and a second combination of the second switch 31b and the third switch 31c, thereby alternately applying a positive polarity voltage and a negative polarity voltage to the first coil 32a.

The communication microcomputer 60 works to transmit information between itself and the primary microcomputer 200 disposed outside the electrical charging apparatus 10. The primary microcomputer 200 serves as a primary controller, while the DC-to-DC microcomputer 70 serves as a secondary controller. The communication microcomputer 60 also works to transmit information between itself and each of the PFC microcomputer 50 and the communication microcomputer 60 using the bus 61 installed inside the electrical charging apparatus 10. The PFC microcomputer 50 and the communication microcomputer 60 exchange information with each other using the bus 61.

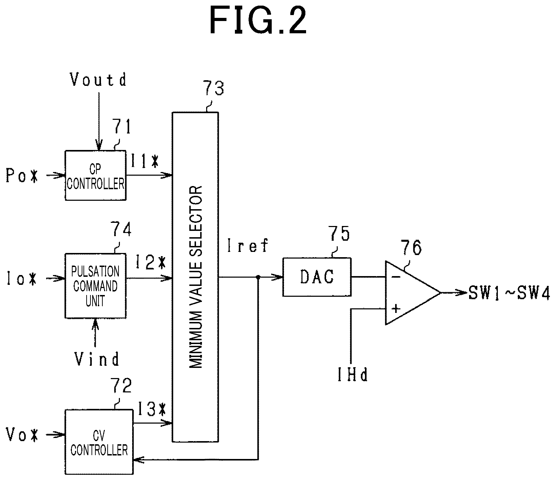

Fig. 2 illustrates a block diagram of a charging task executed by the DC-to-DC microcomputer 70.

The constant power controller 71 calculates the first command current *II** as a function of the charging command power *Po** for the electrical storage device 110 and the output voltage *Voutd.* The first command current *II** is used as a command value for charging the electrical storage device 110 in a constant power (CP) control mode. The charging command power *Po** is inputted from the primary microcomputer 200 to the DC-to-DC microcomputer 70 through the communication microcomputer 60 and the bus 61.

The constant voltage controller 72 calculates the third command current *I3** as a function of the charging command voltage Vo* for the electrical storage device 110 and the reference command current *Iref* which will be described later in detail. The third command current *I3** is used as a command value for charging the electrical storage device 110 in a constant voltage (CV) control mode. The charging command voltage *Vo** is inputted from the primary microcomputer 200 to the DC-to-DC microcomputer 70 through the communication microcomputer 60 and the bus 61.

The selector 73 has inputted thereto the first command current *I1*,* the second command current *I2*,* as calculated by the pulsation command unit 74 which will be described later in detail, and the third command current *I3*.* The selector 73 functions to select the smallest of the first to third command currents *II** to *I3** as the command current *Iref.*

The D-to-A converter 75 works to convert the command current *Iref,* as outputted from the selector 73 in the form of a digital signal, into the command current *Iref* in the form of an analog signal.

The comparator 76 compares the command current *Iref,* as outputted from the D-to-A converter 75, with the dc-to-dc input current *IHd* and outputs a signal indicating which is larger.

The signal generator 77 (i.e., the DC-to-DC microcomputer 70) is responsive to the signal from the comparator 76 to produce drive signals for the switches 31a to 31d (i.e., *SW1* to *SW4)* which alternately turn on a first switch combination and a second switch combination. The first switch combination includes the first switch 31a and the third switch 31c. The second switch combination includes the second switch 31b and the fourth switch 31d. The drive signals are, then, inputted to the gates of the switches 31a to 31d, thereby creating electrical current, as used for charging the electrical storage device 110, in the form of the command current *Iref* in a peak current control mode.

The pulsation command unit 74 calculates the second command current *I2** as a function of the charging command current *Io** inputted thereto from the primary microcomputer 200 through the communication microcomputer 60 and the bus 61. The charging command current *Io** is used as a command value for charging the electrical storage device 110 in the constant current (CC) control mode.

Specifically, the pulsation command unit 74 calculates the second command current *I2** as a function of the charging command current *Io** and the input voltage *Vind.* The input voltage *Vind* is inputted from the PFC microcomputer 50 to the DC-to-DC microcomputer 70 through the bus 61. The pulsation command unit 74, the selector 73, the constant voltage controller 72, and the constant power controller 71 work as a command calculator.

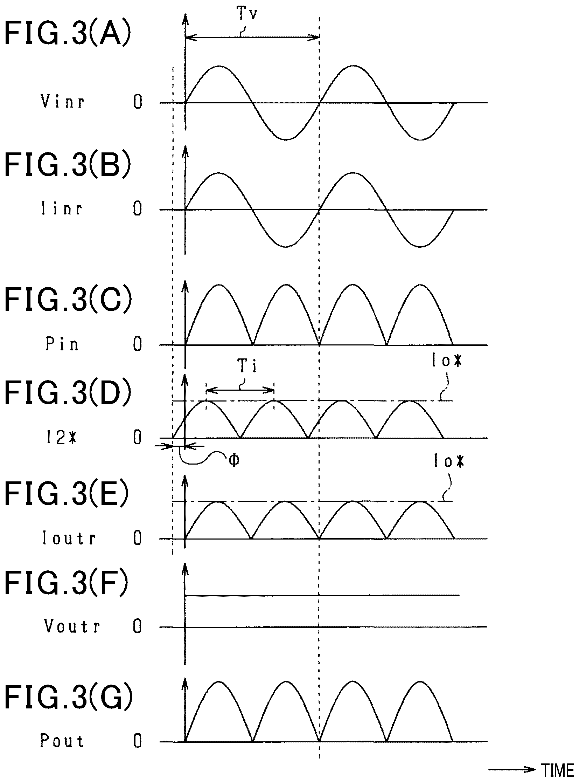

How to calculate the second command current *I2** in the pulsation command unit 74 will be described below with reference to Figs. 3(A) to 3(G). In an example demonstrated in Figs. 3(A) to 3(G), the second command current *I2** is outputted from the selector 73 in the form of the command current *Iref.* Fig. 3(A) illustrates a change in input voltage *Vinr* that is actually inputted from the external alternating-current supply 100 to the electrical charging apparatus 10. Fig. 3(B) illustrates the input current *Iinr* that is actually inputted from the external alternating-current supply 100 to the electrical charging apparatus 10. Fig. 3(C) illustrates a change in input power *Pin (= Vinr* × *Iinr)* that is actually inputted from the external alternating-current supply 100 to the electrical charging apparatus 10. Fig. 3(D) illustrates a change in second command current *I2**. Fig. 3(E) illustrates a change in charging current *Ioutr* that actually flows from the electrical charging apparatus 10 to the electrical storage device 110. Fig. 3(F) illustrates a change in output voltage *Voutr* that is actually outputted from the electrical charging apparatus 10 to the electrical storage device 110. Fig. 3(G) illustrates a change in output power *Pout* that is actually outputted from the electrical charging apparatus 10 to the electrical storage device 110.

In this disclosure, the input voltage *Vinr* is defined as being positive when the first high-potential terminal TH1 is higher in electrical potential than the first low-potential terminal TL1. The output voltage *Voutr* is defined as being positive when the second high-potential terminal TH2 is higher in electrical potential than the second low-potential terminal TL2. The input current *Iinr* is defined as being positive when it is delivered from the external alternating-current supply 100 to the input-side rectifier circuit 13. The charging current *Ioutr* is defined as being positive when it flows to electrically charge the electrical storage device 110.

The pulsation command unit 74 sets the pulsation frequency *fi* of the second command current *I2** two times the frequency of the measured input voltage *Vind.* In other words, the pulsation command unit 74 sets the pulsation cycle *Ti* (=1/*fi*) that is a reciprocal of the pulsation frequency *fi* to be one-half (1/2) of one cycle *Tv* of the input voltage *Vind.* In this embodiment, the second command current *I2** has a full-wave rectified waveform. The second command current *I2** has a minimum value of 0 and a maximum value defined by the charging command current *Io*.*

The pulsation command unit 74 advances the time when the second command current *I2** is minimized to be earlier than a zero-crossing time of the input voltage *Vind* by a predetermined phase *ϕ*. When one cycle of the input voltage *Vinr* is defined as 360°, the predetermined phase *ϕ* is selected to be greater than 0° and smaller than or equal to 10° (e.g., 5°). The phase advancement is for compensating for a lag time until the charging current *Ioutr* actually reaches or follows the second command current *I2**. The phase advancement serves to bring a phase difference between the zero-crossing time of the charging current *Ioutr* and that (e.g., zero-up-crossing time) of the input voltage *Vinr* into agreement with or near zero.

The synchronization of the zero-crossing time of the input voltage *Vinr* with the time when the charging current *Ioutr* reaches a minimum value is achieved by controlling the charging current *Ioutr* into agreement with the second command current *I2** calculated in the above way, thereby causing the charging current *Ioutr* to pulsate synchronously with the pulsation of the input current *Iinr.* This causes a high-frequency component arising from the pulsation of the charging current *Ioutr* to be added to the input current *Iinr,* however, the pulsation of the high-frequency component is substantially matched or synchronized with the fundamental frequency of the input current *Iinr,* thereby minimizing the distortion of the input current *Iinr.*

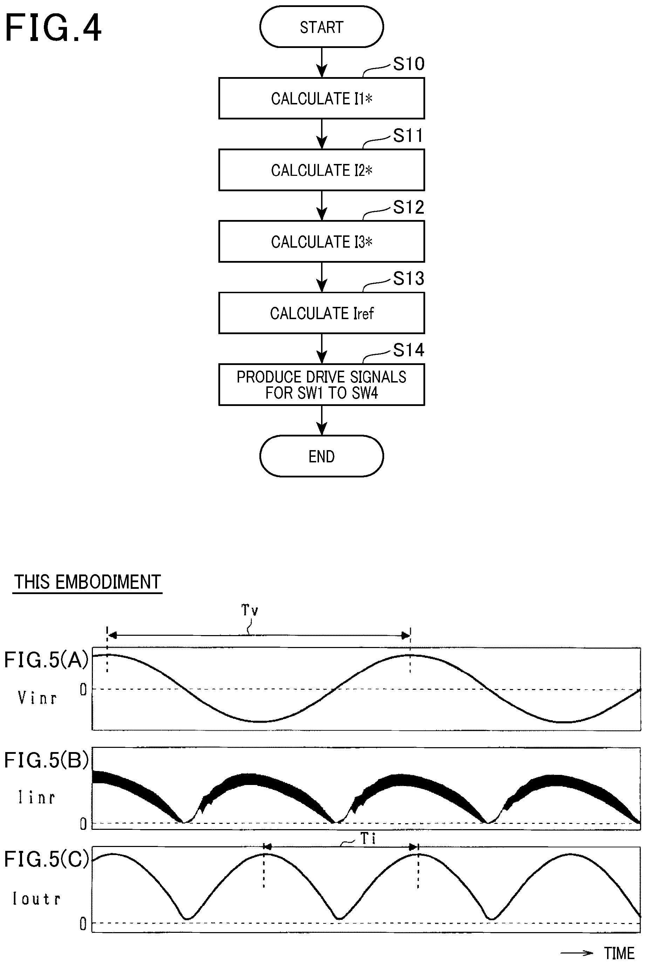

Fig. 4 is a flowchart of a sequence of steps of a charging task executed by the DC-to-DC microcomputer 70. The execution of the charging task is achieved by executing a program stored in, for example, a memory installed in the DC-to-DC microcomputer 70.

After entering the program, the routine proceeds to step S10 wherein the first command current *II** is calculated based on the charging command power *Po** and the output voltage *Voutd.*

The routine proceeds to step S11 wherein the second command current *I2** which pulsates cyclically at the above-described pulsation frequency is calculated as a function of the charging command current *Io** and the input voltage *Vind.*

The routine proceeds to step S12 wherein the third command current *I3** is calculated as a function of the charging command voltage *Vo** and the command current *Iref.*

The routine proceeds to step S13 wherein the smallest of the first to third command currents *II** to *I3** is defined as the command current *Iref.*

The routine proceeds to step S14 wherein drive signals for the switches 31a to 31d are generated using an output from the comparator 76 which is produced based on a result of comparison or a difference between values of the command current *Iref* and the dc-to-dc input current *IHd.*

Figs. 5(A) to 5(C) demonstrate calculated values of the input voltage *Vinr,* the input current *Iinr,* and the charging current *Ioutr* when the charging operation in this embodiment is performed.

As apparent from the above discussion, the DC-to-DC microcomputer 70 (i.e., the controller) works to set the pulsation frequency *fi* of the charging current *Ioutr* to be two times the frequency of the input voltage *Vinr.* The DC-to-DC microcomputer 70 also controls the operation of the DC-to-DC converter 30 to bring a phase difference between the input voltage *Vinr* and the charging current *Ioutr* into agreement with or near zero. This minimizes the distortion of the input current *Iinr* and achieves a required rise in temperature of the electrical storage device 110. This enables the pulsation frequency *fi* of the charging current *Ioutr* to be set within a permissible frequency band of a harmonics of the input current *Iinr* specified by a given standard, e.g., IEC61000-3-2, thereby eliminating a risk that the use of the pulsation frequency fi suitable for increasing the temperature of the electrical storage device 110 may be restricted.

The minimum value of the second command current *I2** is, as described above, set to zero. This enables an amount of heat applied to the electrical storage device 110 to be increased to quickly elevate the temperature of the electrical storage device 110.

The time when the second command current *I2** reaches the smallest value thereof is, as described above, advanced to be earlier than the time when the input voltage *Vind* becomes zero by the predetermined phase *ϕ*. This eliminates a risk that the reduction in distortion of the input current *Iinr* may be undesirably decreased.

### SECOND EMBODIMENT

The second embodiment will be described below with reference to the drawings in terms of parts different from those in the first embodiment. Specifically, the second embodiment is different in how to calculate the second command current *I2** from the first embodiment.

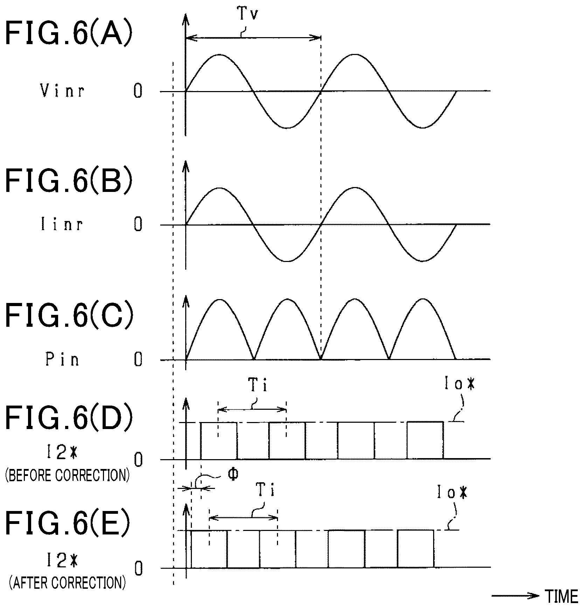

How to calculate the second command current *I2** in the pulsation command unit 74 will be described below with reference to Figs. 6(A) to 6(E). Figs. 6(A) to 6(C) correspond to Figs. 3(A) to 3(C). Fig. 6(D) demonstrates a change in second command current *I2** before the above-described phase correction is made. Fig. 6(E) demonstrates a change in signal whose phase is advanced earlier than that of the second command current *I2** illustrated in Fig. 6(D) by the predetermined phase *ϕ*.

The pulsation command unit 74 first calculates the second command current *I2** that is, as illustrated in Fig. 6(D), in the form of a binary rectangular-wave signal. In Fig. 6(D), the pulsation frequency *fi (=1*/*Ti)* of the second command current *I2** is twice the frequency of the input voltage *Vind.* In this embodiment, each cycle *Ti* of the second command current *I2** includes a first period of time in which the second command current *I2** is set identical with the charging command current *Io** (i.e., a first current value) and a second period of time in which the second command current *I2** is kept zero (i.e., a second current value smaller than the first current value). The first period of time and the second period of time are equal to each other. The time at which the center of each period of time for which the second command current *I2** is kept at the charging command current *Io** appears coincides with the time when an absolute value of the input voltage *Vind* is maximized, that is, an extreme value thereof is reached. The time at which the center of each period of time for which the second command current *I2** is kept zero appears coincides with the zero-crossing time of the input voltage *Vind.*

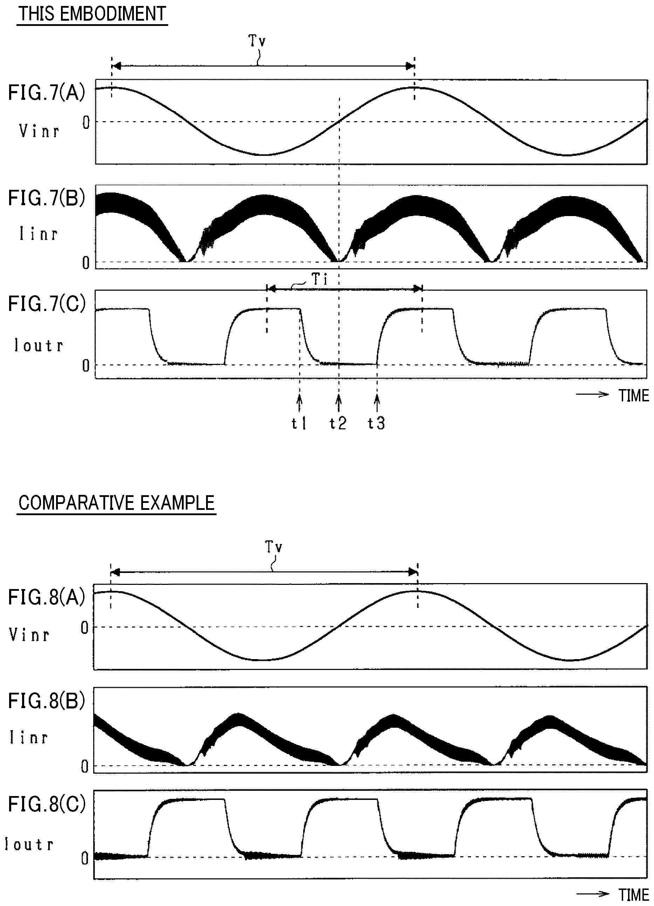

The pulsation command unit 74 works to correct the second command current *I2** illustrated in Fig. 6(D) to advance the phase thereof by the predetermined phase *ϕ* to produce the second command current *I2** illustrated in Fig. 6(E). The use of the second command current *I2** calculated or corrected in the above way results in the input voltage *Vinr,* the input current *Iinr,* and the charging current *Ioutr* illustrated in Figs. 7(A) to 7(C). In Fig. 7(C), time *t1* is a time when the charging current *Ioutr* actually starts to drop following a change in the second command current *I2** corrected, as illustrated in Fig. 6(E), to zero. Time *t3* is a time when the charging current *Ioutr* actually starts to rise following a change in the second command current *I2** corrected, as illustrated in Fig. 6(E), to the charging command current *Io*.* Time *t2* is the zero-crossing time (i.e., the zero-up-crossing time) of the input voltage *Vinr.* If the time intermediate between times *t1* and *t3* is defined as a reference time (=(tl+t3)/2), this embodiment serves to bring a phase difference between the reference time and the zero-crossing time of the input voltage *Vinr* to near zero.

Figs. 8(A) to 8(C) demonstrate a comparative example where a phase difference that is a deviation of the reference time from the zero-crossing time of the input voltage *Vinr* greatly differs from zero. Such a case will result in distortion of the input current *Iinr* being, as illustrated in Fig. 8(B), greater than that illustrated in Fig. 7(B).

The second embodiment, therefore, offers substantially the same beneficial advantages as those in the first embodiment.

### OTHER EMBODIMENTS

Each of the above embodiments may be modified in ways as discussed below.

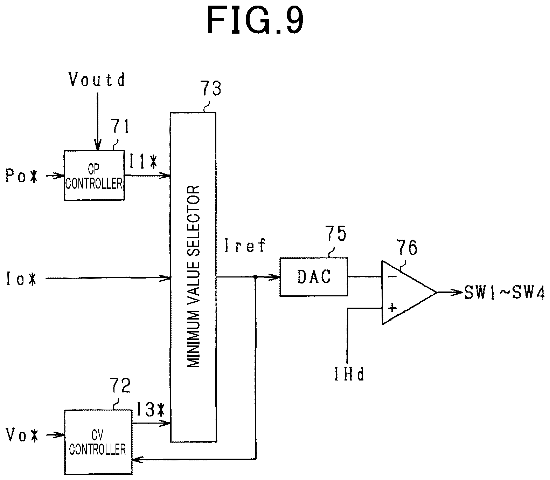

The second embodiment may be designed to have the primary microcomputer 200 to calculate the pulsating charging command current *Io** instead of the DC-to-DC microcomputer 70. The charging command current *Io** has the waveform illustrated in Fig. 3(D) or 6(E). The charging command current *Io** is, as illustrated in Fig. 9, inputted directly into the selector 73. The selector 73 selects the smallest of the first command current *I1*,* the charging command current *Io*,* and the third command current *I3** as the command current *Iref.* This structure enables the waveform of the charging command current *Io** to be changed without need for changing the operation of the DC-to-DC microcomputer 70.

The second command current *I2** in the first embodiment may be of a sine waveform as well as a half-wave rectified waveform.

In the first embodiment, the minimum value of the pulsating second command current *I2** may be set to one-third of the charging command current *Io** or half the charging command current *Io** instead of zero. The same may apply to the second command current *I2** in the second embodiment.

In the above embodiments, the phase difference between the zero-crossing time of the input voltage *Vinr* and the time when the charging current *Ioutr* is minimized or the reference time is set to zero, but however, it may be controlled to be a value other than zero if the above phase difference is set smaller than or equal to one-eighth (1/8) of one cycle of the input voltage *Vinr* (i.e., 45° or less). For instance, the phase difference is preferably set to be lower than or equal to 30°, 20°, or 10°.

In the above embodiments, the pulsation frequency of the second command current *I2** is set to be twice the frequency of the input voltage *Vind,* but however, may be determined to be N or more times the frequency of the input voltage *Vind* where N is an integer more than or equal to three. When the pulsation frequency of the second command current *I2** is N times the frequency of the input voltage *Vind,* it will cause the above phase difference to gradually increase, which decreases the reduction in distortion of the input current *Iinr.* For instance, even in a case where the phase difference is required to be set to a target value of 20°, it may be gradually increased to reach 30°. In order to alleviate such a drawback, each time a difference between an actual value and a target value of the phase difference reaches a preselected value, the second command current *I2** may be reset to bring the actual value of the phase difference into agreement with the target value. The preselected value may be determined to hold the power factor of output of the external alternating-current supply 100 from dropping below a given value (e.g., 0.95).

The electrical charging apparatus may include a bridgeless *PFC* (Power Factor Correction) circuit or a semi-bridgeless *PFC* circuit instead of the input-side rectifier circuit 13 and the boost chopper circuit 20.

The electrical storage device 110 is, as described above, implemented by a battery, but however, may alternatively made of an electrical double-layer capacitor

The mobile object or transportation in which the electrical charging apparatus 10 is provided may be implemented by an airplane or a ship as well as an automotive vehicle. In a case where the electrical rotating machine is installed in an airplane, it is used as a source of lift. In a case where the electrical rotating machine is installed in a ship, it is used as a power source to move the ship. The electrical charging apparatus 10 may alternatively be mounted in a stationary object.

The operations of each controller, device, or unit referred to in this disclosure may be realized by a special purpose computer which is equipped with a processor and a memory and programmed to execute one or a plurality of tasks created by computer-executed programs or alternatively established by a special purpose computer equipped with a processor made of one or a plurality of hardware logical circuits. The controller(s), device(s), or unit(s) and operations thereof may alternatively be realized by a combination of an assembly of a processor with a memory which is programmed to perform one or a plurality of tasks and a processor made of one or a plurality of hardware logical circuits. Computer-executed programs may be stored as computer executed instructions in a non-transitory computer readable medium. The means for performing the functions of parts of the controller need not necessarily include software, but may be realized one or a plurality of hardware devices.

The present disclosure has been described above on the basis of embodiments and modifications, but the embodiments of the invention described above are for facilitating the understanding of the present disclosure and do not limit the present disclosure. The present disclosure can be modified and improved without departing from the drift and the scope of the claims, and the present disclosure include equivalents thereof.

## Claims

1. An electrical charging apparatus (10) for electrically charging an electrical storage device (110) comprising:
an electrical power converter (13, 20, 30) which works to convert an alternating-current input voltage into a direct-current voltage and output the direct-current power to the electrical storage device; and
a controller (70) which controls an operation of the electrical power converter to pulsate a charging current, as outputted from the electrical power converter to the electrical storage device, wherein
the controller works to control the operation of the electrical power converter to set a pulsation frequency of the charging current to be an integral multiple of a frequency of the input voltage and also to bring a phase difference between a zero-crossing time of the input voltage and a time when the charging current is minimized to be smaller than or equal to one-eighth of one cycle of the input voltage.

2. The electrical charging apparatus as set forth in claim 1, wherein the controller sets the pulsation frequency of the charging current to be twice the frequency of the input voltage and controls the electrical power converter to cause the phase difference to approach zero.

3. The electrical charging apparatus as set forth in claim 2, wherein the charging current is of a half-wave rectified waveform or a sine waveform,
the controller controls operation of the electrical power controller to synchronize the zero-crossing time of the input voltage with the time when the charging current reaches a minimum value thereof.

4. The electrical charging apparatus as set forth in any one of claims 1 to 3, wherein the controller includes a command calculator working to calculate a command value (*I2**) for the charging current pulsating at the pulsation frequency,
the command calculator advances a time when the command value is minimized to be earlier than the zero-crossing time of the input voltage,
the controller controls the electrical power converter to bring the charging current for the electrical storage device into agreement with the command value.

5. The electrical charging apparatus as set forth in any one of claims 1 to 4, wherein the electrical power converter includes a first converting unit (13, 20) and a second converting unit (30), the first converting unit working to full-wave rectify an alternating current delivered from an external alternating-current supply (100) and to improve a power factor of output from the external alternating-current supply, the second converting unit working to convert a direct-current voltage outputted from the first converting unit and deliver it to the electrical storage device.

6. The electrical charging apparatus as set forth in claim 2, wherein the electrical power converter includes a first converting unit (13, 20) and a second converting unit (30), the first converting unit working to full-wave rectify an alternating current delivered from an external alternating-current supply (100) and to improve a power factor of output from the external alternating-current supply, the second converting unit working to convert a direct-current voltage outputted from the first converting unit and deliver it to the electrical storage device,
the controller works to control operation of the electrical power converter to bring the charging current for the electrical storage device into agreement with a command value (*I2*, Io*)* which pulsates at the pulsation frequency,
one cycle of the input voltage includes a first period of time whose center coincides with a time when the input voltage has an extreme value and a second period of time that is a rest of the one cycle of the input voltage, the command value being set to a first current value *(Io*)* in the first period of time and also to a second current value smaller than the first current value in the second period of time.

7. The electrical charging apparatus as set forth in claim 6, wherein the electrical charging apparatus is used with a system equipped with a primary controller (200) and a secondary controller that is implemented by said controller,
the primary controller calculates the command value (*Io**) and transmits the command value to the controller.

8. The electrical charging apparatus as set forth in any one of claims 1 to 7, wherein the controller works to control operation of the electrical power converter to bring a minimum value of the pulsating charging current to near zero.

9. A program that is executable by a computer (70) to use an electrical power converter (13, 20, 30) which converts an alternating-current input voltage into a direct-current voltage and outputs the direct-current voltage to an electrical storage device (110) to electrically charge the electrical storage device, wherein
the program causes the computer function to control an operation of the electrical power converter to pulsate a charging current delivered from the electrical power converter to the electrical storage device, to set a pulsation frequency of the charging current to be an integral multiple of a frequency of the input voltage to the electrical power converter, and to bring a phase difference between a zero-crossing time of the input voltage and a time when the charging current is minimized to be smaller than or equal to one-eighth of one cycle of the input voltage.
